# EUROPÄISCHE PATENTSCHRIFT

(11) **EP 0 590 443 B1**
(45) Veröffentlichungstag und Bekanntmachung des Hinweises auf die Patenterteilung: **04.12.1996**
(21) Anmeldenummer: 93115007.2
(22) Anmeldetag: 17.09.1993
(51) Int. Cl.: F25B 15/00

(54) **Sorptionsvorrichtung**
Sorption device
Dispositif à sorption

(30) Priorität: 01.10.1992 DE 4233062
(43) Veröffentlichungstag der Anmeldung: 06.04.1994
(73) Patentinhaber: ELECTROLUX LEISURE APPLIANCES AB, S-105 45 Stockholm (SE)
(72) Erfinder: Ebbeson, Bengt, CH-8356 Ettenhausen (CH)
(74) Vertreter: Grosse, Wolfgang, Dipl.-Ing.

(56) Entgegenhaltungen:
- EP-A- 0 119 776
- US-A- 4 169 362
- US-A- 4 660 629
- US-A- 5 157 937

## Beschreibung

Die Erfindung betrifft eine Sorptionsvorrichtung, insbesondere zur Verwendung in einer Kühlanlage, Klimagerät oder dgl. entsprechend dem Oberbegriff des Patentanspruchs 1.

Mit Sorptionsvorrichtungen kann Wärme von einem ersten Wärmeträger auf einen zweiten Wärmeträger, der sich auf höherer Temperatur befindet, übertragen werden. Dabei wird ein Arbeitsmittel exotherm in einem Sorptionsmittel sorbiert und in einer endothermen Reaktion wieder desorbiert.

Bekannte Sorptionsvorrichtungen, die auch für Kühlanlagen verwendet werden können, weisen langgestreckte Sorptionsbehälter, etwa in Form von geschlossenen Rohren auf. Diese Rohre sind evakuiert und enthalten in einem Teil, der etwa 2/3 ihrer Länge ausmacht, einen Sorptionsstoff, z.B. ein Zeolith. Dieser Teil bildet den Kocheradsorberteil. In dem anderen Teil, der etwa 1/3 der Länge ausmacht und den Kondensatorverdampferteil bildet, befindet sich ein Arbeitsmittel, z.B. Wasser. Durch die Adsorptionswirkung des Zeoliths verdampft das Wasser im Vakuum bei ca.-5 bis 15° C und entzieht dabei der Umgebung Wärme. Der Kocheradsorberteil erwärmt sich durch die freiwerdende Adsorptionswärme.

Wenn nach Abschluß der Reaktion dem Kocheradsorberteil zusätzlich Wärme zugeführt wird, gibt er das adsorbierte Wasser in Form von Wasserdampf wieder ab, welcher in dem Kondensatorverdampferteil wieder zu Wasser kondensiert.

Damit ist es möglich, durch Kühlen des erwärmten Kocheradsorberteils bis in die Nähe der Außentemperatur und nachfolgendes Erwärmen über die Außentemperatur hinaus dem Kondensatorverdampferteil Wärme zu entziehen und diesen zur Kühlung z.B. eines Luftstrom zu verwenden. Der Reaktionsablauf erfolgt dabei periodisch. Durch eine Zusammenfassung mehrerer Sorptionsbehälter und eine aufeinanderfolgende, abwechselnde Kühlung und Erwärmung der Kocheradsorberteile kann ein quasi kontinuierlicher Betrieb erzielt werden.

In der US-PS 5,157,937 ist eine Adsorptionswärmepumpe gezeigt, die entweder als Kühleinrichtung oder als Wärmeerzeuger eingesetzt werden kann. Die Wärmepumpe weist eine Vielzahl von drehbaren Sorptionsmodulen auf, die zwischen ihren äußeren Enden mit einem Thermosiphon gekoppelt sind. Nachteilig an dieser Vorrichtung ist, daß die Sorptionsmodule während eines gesamten Zyklusses durch sämtliche Temperaturniveaus der Anlage geführt werden, was den maximal erreichbaren Wirkungsgrad einschränkt.

Aus der EP 0 151 237 B1 ist eine Sorptionsvorrichtung bekannt, bei dem eine Vielzahl von Sorptionsbehältern achsparallel auf einer Kreisbahn angeordnet sind und sich um eine Drehachse drehen. Die Sorptionsbehälter sind dabei von zwei Gehäusen umschlossen, von denen eines die Kocheradsorberteile und das andere die Kondensatorverdampferteile umgibt. Die Gehäuse sind dabei in mindestens zwei Strömungssegmente unterteilt, die von den Sorptionsbehältern bei jeder Umdrehung einmal durchlaufen werden und in denen jeweils nur eine Wärmezufuhr oder eine Wärmeabfuhr über ein Wärmeträgermedium erfolgt.

Bezüglich der Kocheradsorberteile bedeutet das, daß zum Abführen der Adsorptionswärme und zum Zuführen der Desorptionswärme jeweils eigene Ströme eines Wärmeträgermediums eingesetzt werden, zwischen denen kein Wärmeübergang stattfindet. Wird z.B. Luft zum Zu- und Abführen der Wärme verwandt, so wird einerseits die Außenluft beim Kühlen der Kocheradsorberteile erwärmt und abgeführt, andererseits wird Außenluft z.B. durch einen Gasbrenner erhitzt und gibt ihre Wärme dann zur Desorption an die Kocheradsorberteile ab. Die Anlage weist dadurch einen ungünstigen Wirkungsgrad auf.

Bei den Kondensatorverdampferteilen wird die in der Kondensationsphase freiwerdende Wärme ungenutzt abgeleitet, während ein Teil der in der Verdampfungsphase aufgenommenen Wärme bei hoher relativer Feuchte der zugeführten Luft als Kondensationswärme abgeführt und damit deshalb ebenfalls nicht energetisch genutzt wird, sofern der Apparat nicht als Lufttrocknungsapparat eingesetzt wird.

Aufgabe der Erfindung ist es, einen Sorptionsvorrichtung der ein-gangs genannten Art so auszugestalten, daß die aufzuwendende Energie optimal genutzt und der Wirküngsgrad verbessert wird.

Die Lösung der Aufgabe erfolgt entsprechend den Merkmalen des Patentanspruchs 1 in der Weise, daß der Strömungsweg des Wärmeträgermediums vom Zutritt zum Auslaß so festgelegt ist, daß dieses bei Rotation der Sorptionsbehälter zuerst an den Kocheradsorberteilen in deren Adsorptions- und Abkühlphase anschließende an der Einrichtung zum Erwärmen und dann an den Kocheradsorberteilen in deren Desorptionsphase und Vorwärmphase geführt ist. Die den Kocheradsorberteilen bei deren Kühlung entzogene Wärme wird somit nicht nutzlos abgeführt, sondern bildet die Vorwärmung für die Wärmezufuhr bei der nachfolgenden Desorptionsphase. Andererseits dient die in dem Wärmeträgermedium nach der Desorption enthaltene Restwärme zum Vorwärmen der in der Adsorptionsphase abgekühlten Kocheradsorberteile.

Vorteilhafte Ausgestaltungen der Erfindung ergeben sich aus den Unteransprüchen. Die erfindungsgemäße Vorrichtung ist kompakt aufgebaut und ermöglicht in Verbindung mit der erfindungsgemäßen Trocknungseinrichtung auch eine besonders effiziente Klimatisierung in feuchten Klimazonen. Ferner ist eine einfache Umstellung der Vorrichtung zur Verwendung als Kühl-oder Wärmegerät möglich, so daß eine wirksame Klimatisierung im Sommer- oder Winterbetrieb erzielbar ist. Darüber hinaus sind mit der erfindungsgemäßen Vorrichtung tiefere Temperaturen zur Klimatisierung erzielbar, da durch die vorausgehende Trocknung der zu klimatisierenden Luft ein größerer Teil der Kühlleistung zum Kühlen zur Verfügung steht.

Weitere Vorteile, Merkmale und Einzelheiten der Erfindung ergeben sich aus der nachfolgenden Beschreibung eines bevorzugten Ausführungsbeispiels anhand der Zeichnung. In der Zeichnung zeigen:
- Fig. 1: schematisch eine perspektivische Ansicht einer erfindungsgemäßen Sorptionsvorrichtung ohne vorgeschaltete Trocknungseinrichtung für die angesaugte Umgebungsluft;
- Fig. 2: einen Querschnitt durch das die Kocheradsorberteile enthaltende Gehäuse, entlang der Linie II-II in Fig.1;
- Fig. 3: einen teilweisen Querschnitt durch den Kocheradsorberteil eines Sorptionsbehälters;
- Fig. 4: einen Querschnitt durch das die Kondensatorverdampferteile enthaltende Gehäuse, entlang der Linie IV-IV in Fig.5 in einem kleineren Maßstab;
- Fig. 5: schematisch eine perspektivische Ansicht einer erfindungsgemäßen Sorptionsvorrichtung mit einer zusätzlich daran angeordneten Einrichtung zum Trocknen der zugeführten Luft;
- Fig. 6: einen Schnitt entlang der Linie VI-VI in Fig. 5;
- Fig. 7: einen Querschnitt durch das die Kocheradsorberteile enthaltende Gehäuse in der Ausführung entsprechend Fig. 5, entlang der Linie VII-VII, und
- Fig. 8: den Aufbau eines Sorptionsbehälters.

Die erfindungsgemäße Sorptionsvorrichtung besteht aus zwei koaxial angeordneten und miteinander verbundenen Gehäusen 11 und 12. Das Gehäuse 11 umgibt die Kocheradsorberteile und kann 1/3 bis 2/3 der Gesamtlänge der Vorrichtung umfassen und ist im beschriebenen Ausführungsbeispiel etwa doppelt so lang wie das die Kondensatorverdampferteile umgebende Gehäuse 12. Die Länge wird entsprechend den verwendeten Stoffen optimiert.

An dem Gehäuse 11 ist ein Luftzutritt 13 vorgesehen, in den Umgebungsluft durch ein Radialgebläse angesaugt und durch das Gehäuse zu einem Luftauslaß 14 gefördert wird. Radial ungefähr dem Gebläse gegenüberliegend ist in dem Gehäuse 11 ein Gasbrenner 29 zum Erwärmen der Luft vorgesehen. Die Brenngaseinleitung ist bei 15 angedeutet.

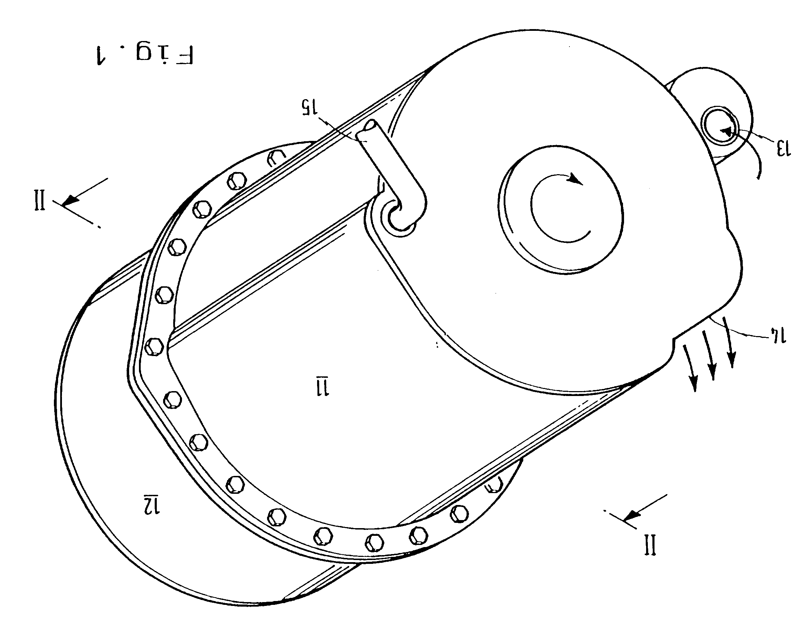

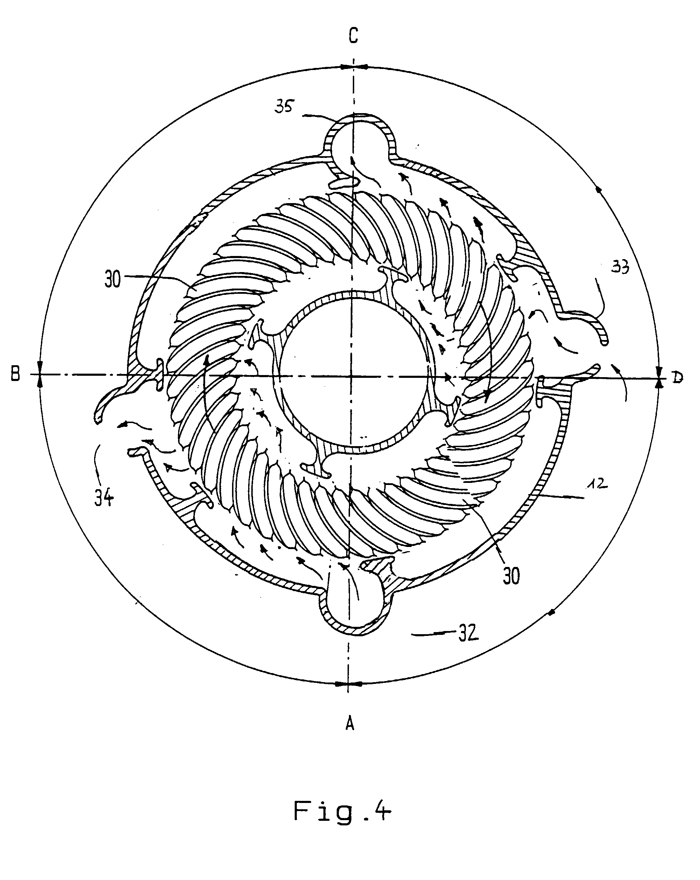

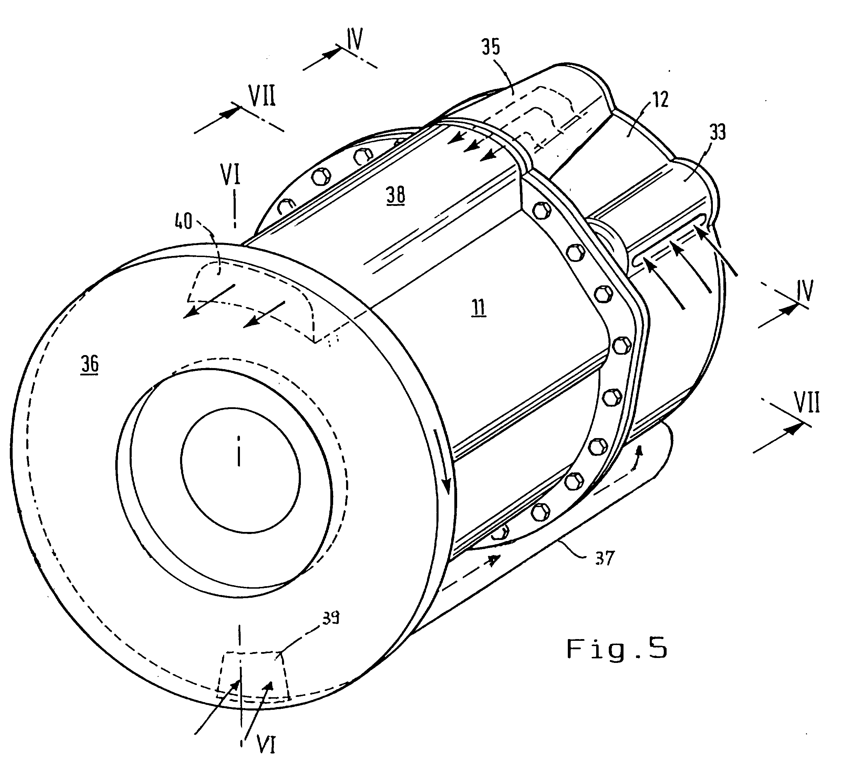

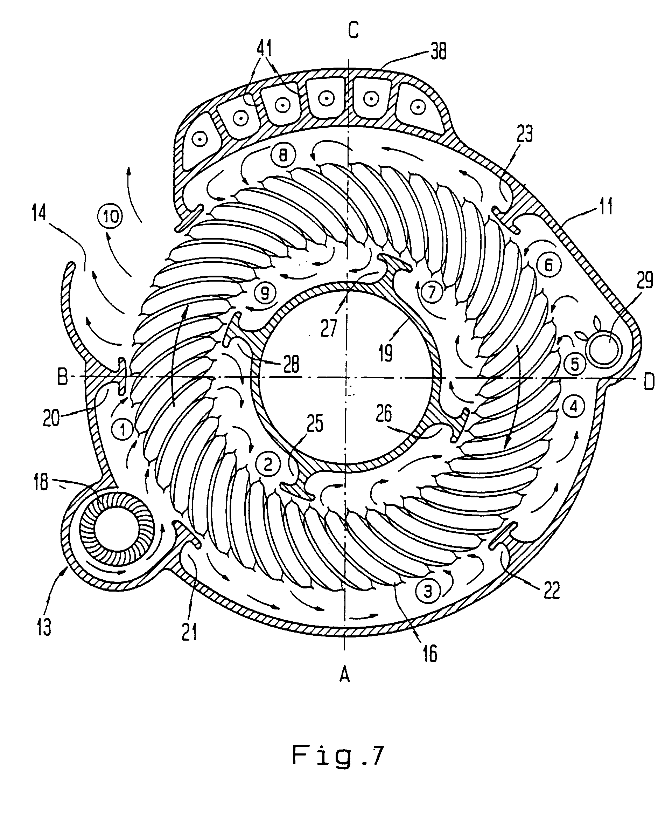

Das Gehäuse 12 kann einen zentralen oder zwei (in Fig. 1 nicht dargestellte) Lufteinlässe aufweisen. In den einen Einlaß 32 wird Luft über den Kanal 37 (Fig.4, 5) mit Raumtemperatur zugeführt und während der Verdampferphase gekühlt. Sie verläßt den zugehörigen Auslaß 34 und wird als Kühlluft z.B. zur Raumkühlung in einem Kraftfahrzeug verwendet. Dem anderen Einlaß 33 wird ebenfalls Luft mit Raumtemperatur zugeleitet und in der Kondensationsphase erwärmt. Sie verläßt den Auslaß 35 als Träger der Abwärme und wird bei Sommerbetrieb nach außen abgeleitet, während sie bei Winterbetrieb der Vorrichtung zur Raumlufterwärmung verwendet werden kann.

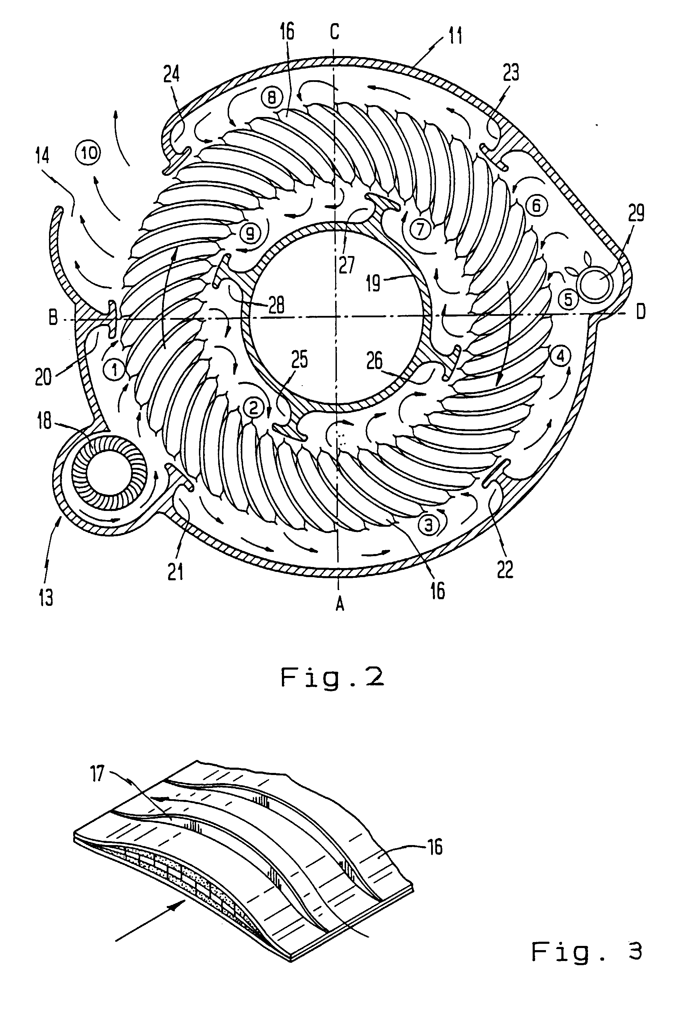

Fig. 2 zeigt einen Querschnitt durch das Gehäuse 11 mit den darin angeordneten Kocheradsorberteilen 16 der Sorptionsbehälter. Die Kocheradsorberteile sind als langgestreckte, flache Hohlkörper ausgebildet und rechtwinklig zu ihrer Längserstreckung gekrümmt. Sie enthalten ein Zeolith, das durch geeignete, nicht näher dargestellte Maßnahmen so verteilt und gelagert ist, daß es eine möglichst große Oberfläche aufweist. Z.B. können die Kocheradsorberteile aus rostfreiem Stahlblech von 0,2 mm Stärke hergestellt sein, welches auf seiner Innenseite mit einer 2 mm starken Schicht aus Zeolith versehen ist. Auf ihrer Außenseite weisen sie kleine Stahlblechrippen auf, so daß sie im zusammengesetzten Zustand gleichmäßig auf Abstand gehalten werden. Die dadurch zwischen ihnen gebildeten Kanäle dienen zur Führung der Luft.

Bei einer anderen Ausführungsform können die in Längsrichtung der Gehäuse 11, 12 durchlaufenden Kohlkörper in Querrichtung zu ihrer Ertsreckung wellenförmig ausgebildet sein, wobei die Wellenmaxima gegeneinanderliegen, um ein Zusammenfalten der sehr dünnen Bleche unter äußerer Druckeinwirkung zu verhindern. Anstelle der äußeren Rippen 17 können auch Blechausbuchtungen oder dgl.vorgesehen sein.

Die Kocheradsorberteile sind in der dargestellten Weise gegeneinander in Form eines Kreisrings angeordnet und rotieren insgesamt in Uhrzeigerrichtung mit einer Geschwindigkeit in der Größenordnung von einer Umdrehung in 3 Minuten. Wie aus, Fig. 3 ersichtlich, sind die in etwa flügelprofilmäßig ausgebildeten Kocheradsorberteile voneinander durch die auf ihrer Oberseite und Unterseite versetzt zueinander angeordneten Rippen 17 beabstandet und bilden zwischen sich radiale Strömungs-kanäle. Die Zeolithschicht 49 kann von kleinen Blechstreifen gebildete Verstärkungen aufweisen, durch die vermieden wird, daß die dünnen Blechprofile bei unterschiedlicher Druckbeaufschlagung verbiegen, und die zur Verbesserung der Wärmeübertragung dienen.

Die Kocheradsorberteile 16 durchlaufen bei einer Umdrehung vier Bereiche, deren Übergänge in Fig. 2 und 4 mit A, B, C und D bezeichnet sind. Dabei ist zu betonen, daß es sich um fließende Übergänge handelt und die Bereiche auch nicht gleich groß sein müssen, sondern von der dargestellten 90°-Einteilung abweichen können.

Der Bereich A-B ist der Adsorptionsbereich. Hier adsorbiert das Zeolith unter Freisetzung von Wärme den Wasserdampf, wobei die Wärme an die Profile abgegeben wird und von der durch den Zutritt 13 eingeleiteten Luft aufgenommen wird. Der Wasserdampf wird in den Kondensatorverdampferteilen erzeugt und entzieht dabei der im Gehäuse 12 zuströmenden Luft Wärme.

Der Bereich B-C ist der Heizbereich, in welchem den Profilen Restwärme aus dem Desorptionsbereich C-D zugeführt wird.

Der Bereich C-D ist der Desorptionsbereich. Hier werden die Kocheradsorberteile über die vorherige Erwärmung hinaus auf ca. 300°C erhitzt, um das adsorbierte Wasser auszutreiben. Das Wasser kondensiert in den Kondensatorverdampferteilen 30 (Fig. 4, 6, 8) unter Abgabe der Kondensationswärme an den zweiten über den Zutritt 33 im Gehäuse 12 zugeführten Luftstrom.

Der Bereich D-A schließlich ist der Kühlbereich. Hier werden die zur Desorption erhitzten Kocheradsorberteile 16 gekühlt, um im anschließenden Bereich A-B wieder Wasser adsorbieren zu können.

Die Zu- und Ableitung der Wärme an den Außenflächen der Kocheradsorberteile 16 erfolgt durch einen Luftstrom, der durch den Lufteinlaß 13 in das Gehäuse 11 eintritt und durch ein Radialgebläse 18 gefördert wird. Die Hauptströmungsrichtung der Luft verläuft dabei entgegen dem Uhrzeigersinn. Die Außenwand des Gehäuses 11 und eine zylindrische Innenwand 19 sind von den z.B.durch Rollschweiß verschlossenen Längsseiten der Kocheradsorberteile beabstandet, so daß in Umfangsrichtung verlaufende Strömungskanäle für die Luft entstehen. An der Außenwand sind nach innen weisende, längs verlaufende Stege 20, 21, 22, 23, 24 ausgebildet, an denen der Luftstrom radial nach innen umgelenkt wird. Die zylindrische Innenwand 19 trägt entsprechende, nach außen weisende Stege 25, 26, 27, 28, die gegenüber den Stegen 20 bis 24 in Umfangsrichtung versetzt sind und den Luftstrom radial nach außen lenken.

In der Nähe des Übergangs D ist Brenner 29, insbesondere ein Gasbrenner vorgesehen, der sich im wesentlichen über die Länge des Gehäuses 11 er-streckt.

Dieser Brenner kann auch im Bereich der Innenwand 19 angeordnet sein.

Der durch das Gebläse 18 zugeführte Luftstrom nimmt den durch Pfeile angedeuteten Weg. Er tritt im Bereich A-B in das Gehäuseinnere ein und wird durch die Stege 20, 21, bei (1) etwa radial nach innen, durch den Steg 25 bei (2) wieder radial nach außen geleitet. Dabei nimmt er die in den Kocheradsorberteilen 16 entstehende Adsorptionswärme auf.

Beim Übergang A kommt die Luft mit den Kocheradsorberteilen in Kontakt, die im Desorptionsbereich C-D erhitzt worden sind. Durch den Steg 22 wird die Luft bei (3) nach innen und durch den Steg 25 in Umfangsrichtung entgegen dem Uhrzeigersinn weitergeleitet. Sie nimmt dabei weitere Wärme auf, während die erhitzten Kocheradsorberteile abgekühlt werden.

Am Steg 26 erfolgt eine erneute Umleitung nach außen, so daß die Luft bei (4) wieder in den äußeren Strömungskanal kommt. Bei (5) wird sie durch den Gasbrenner 29 erhitzt und kommt damit auf ein höheres Wärmeniveau als die Kocheradsorberteile 16. Die Lufttemperatur in diesem Bereich liegt in der Praxis in der Größenordnung von 300°C oder höher.

Die heiße Luft wird bei (6) durch den Steg 23 nach innen und bei (7) durch den Steg 27 wieder nach außen geleitet und gibt ihre Wärme an die Kocheradsorberteile ab, in denen dadurch die oben erläuterte Desorption stattfindet.

Bei (8) erfolgt eine Ablenkung nach innen und bei (9) wiederum nach außen zum endgültigen Austritt bei (10). Bei dieser im Bereich C-B stattfindenden Strömung gibt die Luft ihre Restwärme an die Kocheradsorberteile 16 ab, die gekühlt aus dem Adsorptionsbereich A-B kommen und damit zur De-sorption vorgewärmt werden.

Die Luft hat am Auslaß 14 nur eine geringfügig höhere Temperatur als am Eintritt 13, so daß im Bereich der Kocheradsorberteile 16 nur ein geringer Wärme- und damit Energieverlust auftritt.

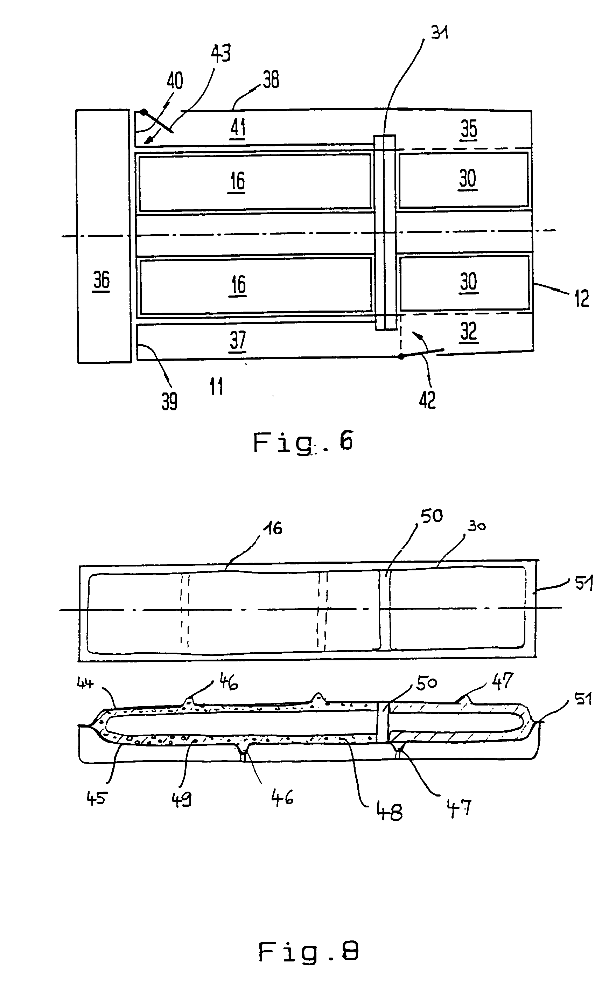

Fig. 4 zeigt einen Schnitt durch das Gehäuse 12 in etwas verkleinertem Maßstab, in dem sich die Kondensatorverdampferteile 30 befinden. Diese Hohlkörper bilden mit den Kocheradsorberteilen 16 jeweils ein sich in Längsrichtung der Gehäuse 11, 12 erstreckendes Bauteil. Am Übergang von dem Gehäuse 11 zu dem Gehäuse 12 sind die Kocheradsorberteile 16 gegenüber den Kondensatorverdampferteilen 30 durch eine in Fig. 6 mit 31 bezeichnete Isolationswand getrennt, durch welche der Durchtritt des Wärmeträgermediums in beiden Richtungen verhindert wird. Die Kocheradsorberteile 16 und die Kondensatorverdampferteile 30 laufen somit gleichachsig miteinander um und werden durch die Isolationswand 31 zusätzlich fixiert..

Wie bereits erwähnt, weist das Gehäuse 12 einen oder zwei Lufteinlässe 32, 33 auf, die in Fig. 1 nicht dargestellt sind. Bei der in Fig. 4 gezeigten Ausführung sind zwei Lufteinlässe 32, 33 sowie zwei Luftauslässe 34, 35 vorhanden. Dem Lufteinlaß 32 wird Umgebungsluft zugeführt, die in der durch Pfeile angezeigten Weise die Kondensatorverdampferteile 30 umströmt und durch den Luftauslaß 34 als klimatisierte Luft austritt. In gleicher Weise strömt in den Lufteinlaß 33 Luft mit Umgebungstemperatur zu, die das Gehäuse 12 durch den Luftauslaß 35 durch den Kanal 38 nach außen verläßt.

Wie ersichtlich, liegen der Einlaß 32 und der Auslaß 34 etwa in dem Bereich A-B, der im Gehäuse 11 den Adsorptionsbereich bildet. Im Gehäuse 12 ist dieser Bereich der Verdampferbereich, in dem die in den Kondensatorverdampferteilen 30 befindliche Flüssigkeit im Vakuum verdampft und dabei Wärme aus der Umgebungsluft aufnimmt. Im Fall von Wasser liegt die Siedetemperatur dabei beispielsweise im Bereich von ca.-5 bis +15° C. Die Wärme wird der die Kondensatorverdampferteile 30 umströmenden Luft entzogen, die somit den Luftauslaß 34 mit einer niedrigeren Temperatur verläßt und als klimatisierte z. B. in einem Kraftfahrzeug verwendet werden kann.

Der Einlaß 33 und der Auslaß 35 überdecken einen Bereich, der in Drehrichtung der Kondensatorverdampferteile 30 in etwa im Bereich C-D liegt, in dem im Gehäuse 11 die Desorption durch Erwärmung erfolgt. Der dabei aus den Kocheradsorberteilen 16 ausgetriebene Dampf kondensiert unter Wärmefreisetzung im Gehäuse 12 in den Kondensatorverdampferteilen 30. Die freigesetzte Wärme wird an die umströmende Luft abgegeben, die infolgedessen den Luftauslaß 35 mit einer höheren Temperatur verläßt als bei der Zufuhr durch den Lufteinlaß 33. Zur Optimierung der KLimatisierung kann es notwendig sein, die Ein-und/oder Auslässe in Abhängigkeit von den gewählten Stoffen in Umfangsrichtung zu verschieben. Im Sommerbetrieb dient der bei 34 austretende Luftstrom zur Erzeugung von klimatisierter Luft und der bei 33 eingeleitete Luftstrom wird bei 35 über den Kanal 38 ins Freie ausgeleitet. Im Winterbetrieb wird der Luftstrom 33-35 über eine Klappe 43 als Warmluft zur Klimatisierung verwendet, während der Luftstrom 32-34 nach außen abgeleitet wird.

Je nach dem Anwendungsgebiet kann die Luftzufuhr konstruktiv auch so ausgebildet werden, daß die Umgebungsluft durch ein gemeinsames Gebläse in einem Kanal zugeführt wird, in dem eine Aufteilung zu den beiden Einlässen 32 und 33 erfolgt.

Ein mögliches Einsatzgebiet der erfindungsgemäßen Sorptionsvorrichtung ist die Kühlung von Raumluft in Klimatisierungsanlagen. Wenn solche Anlagen in Gegenden mit hoher Luftfeuchtigkeit betrieben werden, wie es z.B. in manchen Gebieten der USA der Fall ist, tritt der Effekt auf, daß der in der Luft enthaltene Wasserdampf an den Kühlflächen kondensiert und als Wasser abgeleitet werden muß. Dieser Effekt ist unerwünscht, weil die gesamte Kondensationswärme an das Kühlaggregat übertragen wird, das deswegen eine erhöhte Kälteleistung aufbringen muß, die nicht in eine Kühlung der Luft umgesetzt wird. Der Wirkungsgrad der Anlage wird damit deutlich verschlechtert.

In einer Ausgestaltung der erfindungsgemäßen Sorptionsvorrichtung kann das Kondensieren der Luftfeuchtigkeit ver-mieden und damit der Wirkungsgrad verbessert bzw. auch bei hoher Luftfeuchtigkeit aufrecherhalten werden. Diese Ausgestaltung wird anhand der Fig. 5 bis 7 erläutert.

Das Prinzip besteht bei dieser Ausgestaltung darin, daß die im Kondensatorverdampferbereich freiwerdende, durch den Luftauslaß 35 abgegebene Wärme zum Trocknen der zu kühlenden angesaugten Umgebungsluft ausgenutzt wird. Zum Trocknen von Raumluft sind Geräte bekannt, die einen mit geringer Drehzahl rotierenden, scheiben- oder ringförmigen Rotor aufweisen, der von der zu trocknenden Luft axial durchströmt wird. Die Strömungskanäle des Rotors sind mit einem hygroskopischen Salz beschichtet, das die Luftfeuchtigkeit aufnimmt. Hierfür eignet sich z.B. Lithiumchlorid, das sich ggfs. auf einer Unterlage aus Zeolith befinden kann. Der Rotor durchläuft bei einer Umdrehung zwei Bereiche. In dem ersten Bereich wird er von der feuchten Umgebungsluft durchströmt, die dabei ihre Feuchtigkeit an das Salz abgibt. Durch den zweiten Bereich strömt erhitzte Luft, die eine niedrigere relative Feuchtigkeit aufweist und dem Salz die Feuchtigkeit wieder entzieht.

Gemäß Fig. 5 und 6 ist ein derartiger Rotor 36 vor das die Kocheradsorberteile 16 enthaltende Gehäuse 11 gesetzt. Er ist dabei gleichachsig mit den Kocheradsorberteilen 16 und den Kondensatorverdampferteilen 30 angeordnet und läuft mit derselben Geschwindigkeit wie diese um, etwa mit einer Umdrehung in der Größenordnung von 3 Minuten. Der Lufteinlaß 32 und der Luftauslaß 35 des Gehäuses 12 sind durch Kanäle 37, 38 mit Öffnungen 39, 40 verbunden, die sich an einer Seite des Rotors 36 befinden.

Wie insbesondere Fig. 7 zeigt, verläuft der Kanal 38 auf dem Gehäuse 11 im Bereich C, in dem die Desorption der Kocheradsorberteile 16 durch Erhitzen beginnt. Dieser Bereich wird von der durch den Brenner 29 erwärmten Luft durchströmt. Ein Teil der in dieser Luft enthaltenen Wärmemenge wird durch die Wand des Gehäuses 11 und über in dem Kanal 38 ausgebildete Rippen 41 an die durch den Kanal 38 strömende Luft abgegeben. Beim Austritt aus der Öffnung 40 ist die Luft dadurch deutlich erwärmt und entzieht dem Salz des Rotors 36 unter Wärmeabgabe die Feuchtigkeit.

Die Wärme der aus dem Auslaß 35 austretenden Luft, die sonst ungenutzt ins Freie abgegeben würde, wird auf diese Weise noch ausgenutzt, und auch die im Kocheradsorberbereich durch den Brenner erzeugte Wärme wird besser genutzt. Der bei einer Kondensation der Luftfeuchtigkeit auftretende Leistungsverlust kann somit ohne wesentlichen Energiemehraufwand vermieden werden.

In Fig. 6 sind bei 42 und 43 Klappen angedeutet, die zum Verschließen der Kanäle 37 und 38 und gleichzeitigem Öffnen des Einlasses 32 und des Auslasses 35 über den Kanal 38 nach außen dienen. Zur Erzielung der Luftströmung der gekühlten Luft kann ein Gebläse innerhalb der Vorrichtung im Bereich des Einlasses 32 vorgesehen sein. Zur Erzielung der Strömung der warmen Luft kann ein Gebläse im Bereich des Einlasses 33 vorgesehen sein. Die Klappen können beispielsweise automatisch , wie hygrostatisch oder thermisch gesteuert sein oder von Hand mechanisch und ermöglichen es, daß die Lufttrocknung nur bei entsprechend hoher relativer Luftfeuchte erfolgt, um ein unnötiges Beaufschlagen und Erwärmen des Salzrotors zu vermeiden.

Fig. 8 zeigt in schematisierter Form den Aufbau eines aus Kocheradsorberteil 16 und Kondensatorverdampferteil 30 bestehenden Sorptionsbehälters. Der Sorptionsbehälter besteht aus zwei tiefgezogenen, dünnen Blechen 44, 45 mit einer Wandstärke von etwa 0,2 mm oder weniger. In das in der Zeichnung obere Blech 44 sind, von der Innenseite aus gesehen, Vertiefungen 46, 47 eingeformt. Die Bleche sind an ihrer Innenseite mit einem Trägermaterial 48 beschichtet, z.B. Glasfaser. Der Kocheradsorberteil ist von dem Kondensatorverdampferteil durch eine Beschichtungslücke 50 getrennt. Das Zeolithmaterial 49 ist in dem Trägermaterial 48 aufgenommen.

Bei der Herstellung werden die beiden Bleche 44, 45 getrennt gefertigt, danach in dem dargestellten ebenen Zustand aneinandergelegt und an den umlaufenden Kanten mit einer Rollnaht 51 verschweißt. Die aus Fig. 3 ersichtliche, die Luftströmung begünstigende Krümmung in Form einer Evolvente kann wegen der geringen Wandstärken beim Vereinigen und Verbinden der beiden Bleche erfolgen.

Ein mögliches Anwendungsgebiet der erfindungsgemäßen Sorptionsvorrichtung ist die Kühlung der Fahrgastzelle bei Kraftfahrzeugen. Dabei kann zum Erhitzen der Luft anstelle des Gasbrenners 29 ein Wärmetauscher vorgesehen werden, der in geeigneter Weise die in den Auspuffgasen enthaltene Wärme in der Sorptionsvorrichtung nutzbar macht. Dabei können die Abgase unmittelbar im Abschnitt C-D eingeleitet werden.

Ein weiteres Anwendungsgebiet sind Klimageräte in Wohnwagen und Wohnmobilen, bei denen die Geräte im Dachaufbau untergebracht werden können. Dabei kann die Beheizung des Kocheradsorberbereichs wahlweise mit Gas oder mit Netzstrom erfolgen.

Schließlich kann die erfindungsgemäße Sorptionsvorrichtung bei entsprechender Ausgestaltung auch als Wärmepumpe betrieben und sowohl zum Heizen wie zum Kühlen eingesetzt werden.

Ein wesentlicher Vorteil der erfindungsgemäßen Vorrichtung liegt darin, daß der Luftstrom mehrfach durch die Strömungskanäle von außen nach innen und umgekehrt geleitet wird, wobei im Kocheradsorberbereich eine verbesserte Wärmeausnutzung und im Kondensatorverdampferbereich ein intensiver Wärmeübergang erfolgt. Die dem Kocheradsorberbereich zuzuführende Wärme kann deshalb verringert werden, so daß der Energiebedarf reduziert wird. Die vorteilhafte Konstruktion der Kocheradsorberteile sorgt für eine verbesserte Wärmeverteilung über die Länge und den Querschnitt und damit für eine Verbesserung des Wirkungsgrades.

### Bezugszeichenliste

- 11: Gehäuse
- 12: Gehäuse
- 13: Luftzutritt
- 14: Luftauslaß
- 15: Brenngaseinleitung
- 16: Kocheradsorberteile
- 17: Rippe
- 18: Radialgebläse
- 19: Innenwand
- 20, 21, 22, 23, 24, 25, 26, 27, 28: Steg
- 29: Gasbrenner
- 30: Kondensatorverdampferteile
- 31: Isolationswand
- 32, 33: Lufteinlaß
- 34, 35: Luftauslaß
- 36: Rotor
- 37, 38: Kanal
- 39, 40: Öffnung
- 41: Rippe
- 42, 43: Klappe
- 44, 45: Blech
- 46, 47: Rippe
- 48: Trägermaterial Glasfaser
- 49: Zeolithmaterial
- 50: Lücke
- 51: Rollnaht

## Patentansprüche

1. Sorptionsvorrichtung, insbesondere zur Verwendung in einer Kühlanlage, einem Klimagerät oder dergleichen -mit mehreren langgestreckten Sorptionsbehältern, die über einen Teil ihrer Länge mit Sorptionsstoffen gefüllt sind und in diesem Teil eine Kocheradsorberzone bilden und deren anderer Teil in der Länge eine Kondensatorverdampferzone bildet,
- mit zwei koaxialen Gehäusen (11, 12), in denen die Sorptionsbehälter achsparallel auf einer Kreisbahn rotierend angeordnet sind und sich dabei mit dem Kocheradsorberteil (16) in dem einen Gehäuse (11) und mit dem Kondensatorverdampferteil (30) in dem anderen Gehäuse (12) befinden,
- mit Einrichtungen zum Zuführen eines gasförmigen Wärmeträgermediums, insbesondere Luft an die Außenflächen der rotierenden Sorptionsbehälter in jedem der beiden Gehäuse und
- mit einer Einrichtung (29) zum Erwärmen des gasförmigen Wärmeträgermediums in dem die Kocheradsorberteile (16) der Sorptionsbehälter umschließenden Gehäuse (11), **dadurch gekennzeichnet, daß** der Strömungsweg des Wärmeträgermediums vom Zutritt (13) zum Auslaß (14) so festgelegt ist, daß dieses bei Rotation der Sorptionsbehälter zuerst an den Kocheradsorberteilen (16) in deren Adsorptions- und Abkühlphase, anschließend an der Einrichtung (29) zum Erwärmen und dann an den Kocheradsorberteilen (16) in deren Desorptionsphase und Vorwärmphase geführt ist.

2. Sorptionsvorrichtung nach Anspruch 1, **dadurch gekennzeichnet,** daß das Wärmeträgermedium in der Drehrichtung der Sorptionsbehälter entgegengesetzter Richtung durch das Gehäuse (11) geführt ist und auf seinem Strömungsweg abwechselnd radial von außen nach innen und von innen nach außen an den Kocheradsorberteilen (16) entlangströmt.

3. Sorptionsvorrichtung nach Anspruch 1 oder 2, **dadurch gekennzeichnet,** daß die Einrichtung (29) zum Erwärmen des Wärmeträgermediums etwa in der Mitte des Strömungsweges des Wärmeträgermediums durch das Gehäuse angeordnet ist.

4. Sorptionsvorrichtung nach einem der Ansprüche 1 bis 3, **dadurch gekennzeichnet,** daß das Wärmeträgermedium auf seinem Strömungsweg vom Eintritt (13) bis zum Auslaß (14) nacheinander folgende Reaktionsbereiche der Sorptionsbehälter durchströmt:
1) den Adsorptionsbereich (B-A), in dem die bei der Adsorption freiwerdende Wärme an das Wärmeträgermedium übergeht;
2) den Kühlbereich (A-D), in dem die zur Desorption erwärmten Kocheradsorberteile (16) ihre Wärme an das Wärmeträgermedium abgeben;
3) den Desorptionsbereich (D-C), in dem das Wärmeträgermedium durch die Einrichtung (29) erwärmt wird und seine Wärme an die Kocheradsorberteile (16) abgibt, um die in dem Sorptionsstoff enthaltene Flüssigkeit auszutreiben und aus dem Kocheradsorberteil in den Kondensatorverdampferteil der Sorptionsbehälter zu überführen;
4) den Vorwärmbereich (C-B), in dem die aus dem Adsorptionsbereich kommenden, gekühlten Kocheradsorberteile (16) für die nachfolgende Desorption vorgewärmt werden.

5. Sorptionsvorrichtung nach einem der Ansprüche 1 bis 4, **dadurch gekennzeichnet,** daß das den Kondensatorverdampferteil (30) umschließende Gehäuse (12) einen Zutritt (32- Sommerbetrieb, bzw. 33-Winterbetrieb) sowie einen Austritt (34- Sommerbetrieb, bzw 35- Winterbetrieb) für die zu klimatisierende Luft und einen Zutritt (33- Sommerbetrieb, bzw. 32-Winterbetrieb) sowie einen Austritt (35- Sommerbetrieb, bzw. 34- Winterbetrieb) für ein gasförmiges Prozeßmedium aufweist.

6. Sorptionsvorrichtung nach Anspruch 5, **dadurch gekennzeichnet,** daß die beiden Lufteinlässe (32, 33) mit einer gemeinsamen Luftzuführung verbunden sind.

7. Sorptionsvorrichtung nach einem der Ansprüche 1 bis 6, **dadurch gekennzeichnet,** daß zur Führung des Wärmeträgermediums radial von außen nach innen und umgekehrt in dem Gehäuse axial verlaufende Stege (20 bis 28) vorgesehen sind, die bis an die äußere und die innere Kreisringbahn der Sorptionsbehälter reichen und innen und außen in Umfangsrichtung gegeneinander versetzt sind.

8. Sorptionsvorrichtung nach einem der Ansprüche 1 bis 7, **dadurch gekennzeichnet,** daß in dem Gehäuse (11) am Zutritt für das Wärmeträgermedium ein Gebläse (18) vorgesehen ist.

9. Sorptionsvorrichtung nach einem der Ansprüche 1 bis 7, **dadurch gekennzeichnet,** daß im Bereich der Einlässe (32, 33) Gebläse vorgesehen sind.

10. Sorptionsvorrichtung nach Anspruch 8, **dadurch gekennzeichnet,** daß das Gebläse (18) ein Radialgebläse ist.

11. Sorptionsvorrichtung nach einem der Ansprüche 1 bis 10, **dadurch gekennzeichnet,** daß die Einrichtung zum Erwärmen des Wärmeträgermediums ein Brenner (29) ist.

12. Sorptionsvorrichtung nach einem der Ansprüche 1 bis 10, **dadurch gekennzeichnet,** daß die Einrichtung zum Erwärmen des Wärmeträgermediums ein mit der Abwärme eines Verbrennungsmotors beaufschlagter Wärmetauscher ist.

13. Sorptionsvorrichtung nach einem der Ansprüche 1 bis 12, **dadurch gekennzeichnet,** daß die Sorptionsbehälter als langgestreckte flache Hohlkörper ausgebildet sind.

14. Sorptionsvorrichtung nach Anspruch 13, **dadurch gekennzeichnet,** daß die Sorptionsbehälter im Querschnitt gekrümmt sind.

15. Sorptionsvorrichtung nach Anspruch 13 oder 14, **dadurch gekennzeichnet,** daß die Sorptionsbehälter auf ihren Außenflächen quer zur Längserstreckung verlaufende Rippen (17, 46, 47) aufweisen, die die Außenflächen auf Abstand halten und Strömungskanäle für das Wärmeträgermedium bilden.

16. Sorptionsvorrichtung nach Anspruch 15, **dadurch gekennzeichnet,** daß die Sorptionsbehälter an ihrer Innenseite mit einem Trägermaterial (48) beschichtet sind.

17. Sorptionsvorrichtung nach einem der Ansprüche 1 bis 16, **dadurch gekennzeichnet,** daß die in den Kocheradsorberteilen (16) der Sorptionsbehälter enthaltenen Sorptionsstoffe ein Zeolith und Wasser sind.

18. Sorptionsvorrichtung nach einem der Ansprüche 1 bis 16, **dadurch gekennzeichnet,** daß die in den Kocheradsorberteilen (16) der Sorptionsbehälter enthaltenen Sorptionsstoffe von flüssigem Ammoniak und einem Salz bzw. einem vergleichbaren in Ammoniak lösbaren Stoff gebildet sind.

19. Sorptionsvorrichtung nach einem der Ansprüche 1 bis 16, **dadurch gekennzeichnet,** daß die in den Kocheradsorberteilen (16) der Sorptionsbehälter enthaltenen Sorptionsstoffe von flüssigem Ammoniak und einer Aktivkohle gebildet sind.

20. Sorptionsvorrichtung nach Anspruch 17, **dadurch gekennzeichnet,** daß das Zeolith (49) schichtförmig auf der Innenseite der Kocheradsorberteile (16) aufgetragen und durch Verstärkungen versteift ist, so daß das Profil der Kocheradsorberteile (16) unterschiedlichen Druckbeaufschlagungen standhält.

21. Sorptionsvorrichtung nach Anspruch 17, **dadurch gekennzeichnet,** daß das Zeolith in dem Trägermaterial (48) aufgenommen ist.

22. Sorptionsvorrichtung nach einem der Ansprüche 1 bis 19, **dadurch gekennzeichnet,** daß sie mit einer Trocknungseinrichtung für in dem Kondensatorverdampferbereich zu kühlende Luft versehen ist.

23. Sorptionsvorrichtung nach Anspruch 22, **dadurch gekennzeichnet,** daß die Trocknungseinrichtung einen mit einem hygroskopischen Salz versehenen Rotor (36) aufweist, der von der zu trocknenden Luft axial durchströmt wird.

24. Sorptionsvorrichtung nach Anspruch 23, **dadurch gekennzeichnet,** daß der Rotor (36) synchron mit den Sorptionsbehältern umläuft.

25. Sorptionsvorrichtung nach Anspruch 23 oder 24, **dadurch gekennzeichnet,** daß der Luftauslaß (35) für die von den Kondensatorverdampferteilen (30) erwärmte Luft mit dem Rotor (36) verbunden ist, um dem Salz die aufgenommene Feuchtigkeit zu entziehen.

26. Sorptionsvorrichtung nach Anspruch 25, **dadurch gekennzeichnet,** daß der Luftauslaß (35) mit einem zu dem Rotor (36) führenden Kanal (38) verbunden ist, der mit dem die Kocheradsorberteile (16) umschließenden Gehäuse in dem Bereich (C) in wärmeleitender Verbindung steht, in dem die anfängliche Erwärmung der Kocheradsorberteile (16) erfolgt.

27. Sorptionsvorrichtung nach Anspruch 26, **dadurch gekennzeichnet,** daß in dem Kanal (38) in Strömungsrichtung verlaufende, wärmeleitende Rippen (41) angeordnet sind.

28. Sorptionsvorrichtung nach einem der Ansprüche 22 bis 27, **dadurch gekennzeichnet,** daß der Einlaß (32) für die zu kühlende Luft und der Auslaß (35) für die erwärmte Luft mit Einrichtungen versehen sind, die den Einlaß (32) und den Auslaß (35) wahlweise mit der Trocknungseinrichtung oder mit der Umgebungsluft verbinden.

29. Sorptionsvorrichtung nach Anspruch 28, **dadurch gekennzeichnet,** daß die Einrichtungen aus hygrostatisch, thermisch oder von Hand mechanisch gesteuerten Klappen (42, 43) bestehen.

## Claims

1. Sorption device, particularly for use in a cooling installation, an air conditioning device or the like
- with a plurality of elongate sorption containers which are filled over a portion of their length with sorption materials and constitute a cooker adsorber zone in this portion and whose other portion of their length constitutes a condenser-evaporator zone
- with two coaxial housings (11,12) in which the sorption containers are arranged with their axes parallel to rotate on a circular path and are situated with the cooker adsorber portion (16) in one housing (11) and with the condenser-evaporator portion (30) in the other housing (12),
- with devices for supplying a gaseous heat carrier medium, particularly air, to the outer surfaces of the rotating sorption containers in each of the two housings and
- with a device (29) for heating the gaseous heat carrier medium in the housing (11) surrounding the cooker adsorber portions (16) of the sorption containers, characterised in that the flow path of the heat carrier medium from the inlet (13) to the outlet (14) is so defined that when the sorption containers rotate it is guided firstly to the cooker adsorber portions (16) in their adsorption and cooling phase, subsequently to the device (29) for heating and then to the cooker adsorber portions (16) in their desorption phase and preheating phase.

2. Sorption device as claimed in claim 1, characterised in that the heat carrier medium is guided through the housing (11) in a direction opposed to the direction of rotation of the sorption containers and on its flow path flows along the cooker adsorber portions (16) alternately radially from the exterior to the interior and from the interior to the exterior.

3. Sorption device as claimed in claim 1 or 2, characterised in that the device (29) for heating the heat carrier medium is arranged approximately in the centre of the flow path of the heat carrier medium through the housing.

4. Sorption device as claimed in one of claims 1 to 3, characterised in that the heat carrier medium flows on its flow path from the inlet (13) to the outlet (14) successively through the following reaction regions:
(i) The adsorption region (B-A) in which the heat liberated in the adsorption transfers to the heat carrier medium;
(ii) The cooling region (A-D) in which the cooker adsorber portions (16) heated for the desorption give up their heat to the heat carrier medium;
(iii) The desorption region (D-C) in which the heat carrier medium is heated by the device (29) and gives its heat up to the cooker adsorber portions (16) in order to drive off the liquid contained in the sorption material and to transfer it from the cooker adsorber portion into the condenser-evaporator portion of the sorption containers;
(iv) The preheating region (C-B) in which the cooled cooker adsorber portions (16) coming out of the absorption region are preheated for the subsequent desorption.

5. Sorption device as claimed in one of claims 1 to 4, characterised in that the housing (12) surrounding the condenser-vaporiser portion (30) has an inlet (32 - summer operation and 33 - winter operation) and an outlet (34 - summer operation and 35 - winter operation) for the air to be conditioned and an inlet (33 - summer operation and 32 - winter operation) and an outlet (35 - summer operation and 34 - winter operation) for a gaseous process medium.

6. Sorption device as claimed in claim 5, characterised in that the two air inlets (32,33) are connected to a common air supply line.

7. Sorption device as claimed in one of claims 1 to 6, characterised in that for the purpose of guiding the carrier medium radially inwardly from the exterior and vice versa in the housing, axially extending webs (20 to 28) are provided which extend to the outer and the inner circular annular path of the sorption containers and are offset from one another in the peripheral direction at the interior and exterior.

8. Sorption device as claimed in one of claims 1 to 7, characterised in that a fan (18) is provided in the housing (11) at the inlet for the heat carrier medium.

9. Sorption device as claimed in one of claims 1 to 7, characterised in that fans are provided in the region of the inlets (32,33).

10. Sorption device as claimed in claim 8, characterised in that the fan (18) is a radial flow fan.

11. Sorption device as claimed in one of claims 1 to 10, characterised in that the device for heating the heat carrier medium is a burner (29).

12. Sorption device as claimed in one of claims 1 to 10, characterised in that the device for heating the heat carrier medium is a heat exchanger which is acted upon by the waste heat of a combustion engine.

13. Sorption device as claimed in one of claims 1 to 12, characterised in that the sorption containers are constructed as elongate, flat hollow bodies.

14. Sorption device as claimed in claim 13, characterised in that the sorption containers are curved in cross-section.

15. Sorption device as claimed in claim 13 or 14, characterised in that on their external surfaces the sorption containers have ribs (17,46,47) which extend transverse to the longitudinal direction and which maintain the outer surfaces at a distance and define flow passages for the heat carrier medium.

16. Sorption device as claimed in claim 15, characterised in that the sorption containers are coated on their inner surface with a carrier material (48).

17. Sorption device as claimed in one of claims 1 to 16, characterised in that the sorption materials contained in the cooker adsorber portions (16) of the sorption containers are a zeolite and water.

18. Sorption device as claimed in one of claims 1 to 16, characterised in that the sorption materials contained in the cooker adsorber portions (16) of the sorption containers are constituted by liquid ammonia and a salt or a comparable material which is soluble in ammonia.

19. Sorption device as claimed in one of claims 1 to 16, characterised in that the sorption materials contained in the cooker adsorber portions (16) of the sorption containers are constituted by liquid ammonia and an active carbon.

20. Sorption device as claimed in claim 17, characterised in that the zeolite (49) is applied in a layer on the inner surface of the cooker adsorber portions (16) and is stiffened by reinforcement so that the profile of the cooker adsorber portions (16) withstands the action of different pressures.

21. Sorption device as claimed in claim 17, characterised in that the zeolite is incorporated in the carrier material (48).

22. Sorption device as claimed in one of claims 1 to 19, characterised in that it is provided with a drying device for air to be cooled in the condenser-evaporator region.

23. Sorption device as claimed in claim 22, characterised in that the drying device has a rotor (26) which is provided with a hygroscopic salt and through which air to be dried flows axially.

24. Sorption device as claimed in claim 23, characterised in that the rotor (36) rotates synchronously with the sorption containers.

25. Sorption device as claimed in claim 23 or 24, characterised in that the air outlet (35) for the air heated by the condenser-evaporator portions (30) is connected to the rotor (36) in order to remove the absorbed moisture from the salt.

26. Sorption device as claimed in claim 25, characterised in that the air outlet (35) is connected to a passage (38) which leads to the rotor (36) and which is in heat-conductive communication with the housing surrounding the cooker adsorber portion (16) in the region (C) in which the initial heating of the cooker adsorber portions (16) occurs.

27. Sorption device as claimed in claim 26, characterised in that heat-conductive ribs (41), which extend in the flow direction in the passage (38), are provided.

28. Sorption device as claimed in one of claims 22 to 27, characterised in that the inlet (32) for the air to be cooled and outlet (35) for the heated air are provided with devices which selectively connect the inlet (32) and the outlet (35) to the drying device or to the atmosphere.

29. Sorption device as claimed in claim 28, characterised in that the devices comprise hygrostatically, thermally or manually mechanically controlled flaps (42,43).

## Revendications

1. Dispositif à sorption, destiné à être utilisé notamment dans une installation de refroidissement, une installation de climatisation ou analogue, comportant
- plusieurs récipients allongés à sorption, qui sont remplis par des substances de sorption sur une partie de leur longueur et forment, dans cette partie, une zone d'adsorption à ébullition et dont l'autre partie forme, dans le sens de la longueur, une zone d'évaporation à condensation,
- deux carters coaxiaux (11,12), dans lesquels les récipients à sorption sont disposés avec leurs axes parallèles et de manière à tourner sur une trajectoire circulaire et sont situés, avec la partie d'adsorption à ébullition (16), dans un premier carter (11) et, avec la partie d'évaporation à condensation (30), dans l'autre carter (12),
- des dispositifs pour envoyer un fluide caloporteur gazeux, notamment de l'air, aux surfaces extérieures des récipients à sorption rotatifs situés dans chacun des deux carters, et
- un dispositif (22) pour chauffer le fluide caloporteur gazeux dans le carter (11) qui entoure les parties d'adsorption à ébullition (16) des récipients à sorption, caractérisé en ce que le trajet d'écoulement du fluide caloporteur de l'entrée (13) à la sortie (14) est fixé de telle sorte que lors de la rotation des récipients à sorption, ce fluide est guidé tout d'abord sur les parties d'adsorption à ébullition (16), dans la phase d'adsorption et de refroidissement, puis sur le dispositif de chauffage (29) et ensuite sur les parties d'adsorption à ébullition (16), pendant la phase de désorption et la phase de préchauffage de ces parties.

2. Dispositif à sorption selon la revendication 1, caractérisé en ce que le fluide caloporteur est guidé en sens opposé du sens de rotation du récipient à sorption, à l'intérieur du carter (11) et, sur son trajet d'écoulement, circule alternativement radialement de l'extérieur vers l'intérieur et de l'intérieur vers l'extérieur, sur les parties d'adsorption à ébullition (16).

3. Dispositif de sorption selon la revendication 1 ou 2, caractérisé en ce que le dispositif (29) de chauffage du fluide caloporteur est disposé approximativement au centre du trajet d'écoulement du fluide caloporteur à l'intérieur du carter.

4. Dispositif de sorption selon l'une des revendications 1 à 3, caractérisé en ce que sur son trajet d'écoulement de l'entrée (13) à la sortie (14), le fluide caloporteur traverse successivement les zones de réaction suivantes des récipients à sorption :
1) la zone d'adsorption (B-A), dans laquelle la chaleur libérée lors de l'adsorption est transférée au fluide caloporteur;
2) la zone de refroidissement (A-D), dans laquelle les parties d'adsorption à ébullition (16), chauffées pour la désorption, délivrent leur chaleur au fluide caloporteur;
3) la zone de désorption (D-C), dans laquelle le fluide caloporteur est chauffé par le dispositif (22) et délivre cette chaleur aux parties d'adsorption à ébullition (16), de manière à extraire le liquide contenu dans la substance de sorption et le transférer de la partie d'adsorption à ébullition dans la partie d'évaporation à condensation des récipients à sorption;
4) la zone de préchauffage (C-B), dans laquelle les parties d'adsorption à ébullition (16), qui sont refroidies et arrivent de la zone d'adsorption, sont préchauffées pour la désorption suivante.

5. Dispositif de sorption selon l'une des revendications 1 à 4, caractérisé en ce que le carter (12), qui entoure la partie d'évaporation à condensation (30), possède une entrée (32 - fonctionnement en été ou 33 - fonctionnement en hiver) ainsi qu'une sortie (34 - fonctionnement en été ou 35 - fonctionnement en hiver) pour l'air devant être climatisé et un accès (33 - fonctionnement en été ou 32 - fonctionnement en hiver) ainsi qu'une sortie (35 - fonctionnement en état ou 34 - fonctionnement en hiver) pour un fluide de traitement gazeux.

6. Dispositif à sorption selon la revendication 5, caractérisé en ce que les deux entrées d'air (32,33) sont reliées à un dispositif commun d'envoi d'air.

7. Dispositif à sorption selon l'une des revendications 1 à 6, caractérisé en ce que pour le guidage du fluide caloporteur il est prévu des barrettes (20 à 28), qui s'étendent axialement dans le carter et ce radialement de l'extérieur vers l'intérieur et inversement et qui s'étendent jusqu'à la piste annulaire circulaire extérieure et jusqu'à la piste annulaire circulaire intérieure des récipients à sorption et sont décalées l'une par rapport à l'autre intérieurement et extérieurement dans la direction circonférentielle.

8. Dispositif à sorption selon l'une des revendications 1 à 7, caractérisé en ce qu'un ventilateur (18) est prévu dans le carter (11) dans l'entrée prévue pour le fluide caloporteur.

9. Dispositif à sorption selon l'une des revendications 1 à 7, caractérisé en ce que des ventilateurs sont prévus dans la zone des entrées (32,33).

10. Dispositif à sorption selon la revendication 8, caractérisé en ce que le ventilateur (18) est un ventilateur axial.

11. Dispositif à sorption selon l'une des revendications 1 à 10, caractérisé en ce que le dispositif pour chauffer le fluide caloporteur est un brûleur (29).

12. Dispositif à sorption selon l'une des revendications 1 à 10, caractérisé en ce que le dispositif de chauffage du fluide caloporteur est un échangeur de chaleur chargé par la chaleur dégagée par un moteur à combustion interne.

13. Dispositif à sorption selon l'une des revendications 1 à 12, caractérisé en ce que les récipients à sorption sont agencés sous la forme de corps creux plats et allongés.

14. Dispositif à sorption selon la revendication 13, caractérisé en ce que lesdits récipients à sorption sont cintrés en coupe transversale.

15. Dispositif à sorption selon la revendication 13 ou 14, caractérisé en ce que les récipients à sorption possèdent, sur leur surface extérieure, des nervures (17,46,47) qui s'étendent transversalement par rapport à la direction longitudinale et qui maintiennent à distance les surfaces extérieures et forment des canaux d'écoulement pour le fluide caloporteur.

16. Dispositif à sorption selon la revendication 15, caractérisé en ce que les récipients à sorption sont recouverts, sur leur face intérieure, par un matériau de support (48).

17. Dispositif à sorption selon l'une des revendications 1 à 16, caractérisé en ce que les substances de sorption, contenues dans les parties d'adsorption à ébullition (16) des récipients à sorption, sont de la zéolithe et de l'eau.

18. Dispositif à sorption selon l'une des revendications 1 à 16, caractérisé en ce que les substances de sorption, contenues dans les parties d'adsorption à ébullition (16) des récipients à sorption, sont formées par de l'ammoniac liquide et un sel ou une substance comparable soluble dans l'ammoniac.

19. Dispositif à sorption selon l'une des revendications 1 à 16, caractérisé en ce que les substances de sorption contenues dans les parties d'adsorption à ébullition (16) sont formées par de l'ammoniac liquide et un charbon actif.

20. Dispositif à sorption selon la revendication 17, caractérisé en ce que la zéolithe (49) est déposée sous la forme d'une couche sur la face intérieure des parties d'adsorption à ébullition (16) et est renforcée par des éléments de renforcement de sorte que le profil des éléments d'adsorption à ébullition (16) résiste à différentes charges de pression.

21. Dispositif à sorption selon la revendication 17, caractérisé en ce que la zéolithe est logée dans le matériau de support (48).

22. Dispositif à sorption selon l'une des revendications 1 à 19, caractérisé en ce qu'il est équipé d'un dispositif de dessication pour l'air devant être refroidi dans la zone d'évaporation à condensation.

23. Dispositif à sorption selon la revendication 22, caractérisé en ce que le dispositif de dessication possède un rotor (36) pourvu d'un sel hygroscopique et qui est traversé axialement par l'air devant être desséché.

24. Dispositif à sorption selon la revendication 23, caractérisé en ce que le rotor (36) tourne en synchronisme avec les récipients à sorption.

25. Dispositif à sorption selon la revendication 23 ou 24, caractérisé en ce que la sortie (35) pour l'air chauffé par les parties d'évaporation à condensation (30), est reliée au rotor (36), de manière à retirer du sel l'humidité qui y est logée.

26. Dispositif à sorption selon la revendication 25, caractérisé en ce que la sortie (35) pour l'air est reliée à un canal (38) qui aboutit au rotor (36) et est reliée selon une liaison thermoconductrice au carter entourant les parties d'adsorption à ébullition (16), dans la région (C), dans laquelle s'effectue l'échauffement initial des parties d'adsorption à ébullition (16).

27. Dispositif à sorption selon la revendication 26, caractérisé en ce que des nervures thermoconductrices (41), qui s'étendent dans la direction d'écoulement, sont disposées dans le canal (38).

28. Dispositif à sorption selon l'une des revendications 22 à 27, caractérisé en ce que l'entrée (32) pour l'air à refroidir et la sortie (35) pour l'air chaud sont équipées de dispositifs, qui relient l'entrée (32) et la sortie (35) au choix au dispositif de dessication ou à l'air ambiant.

29. Dispositif à sorption selon la revendication 28, caractérisé en ce que les dispositifs sont constitués par des clapets (42,43), qui sont commandés par voie thermique hydrostatiques, par voie thermique ou mécaniquement à la main.
